## Europäisches Patentamt

## European Patent Office

## Office européen des brevets

(19)

(11) Veröffentlichungsnummer: **0 013 353**
**B1**

(12) ## EUROPÄISCHE PATENTSCHRIFT

(45) Veröffentlichungstag der Patentschrift:
**12.01.83**

(51) Int. Cl.³: **H 02 K 15/10,** H 02 K 1/18, H 02 K 3/34

(21) Anmeldenummer: **79104984.4**

(22) Anmeldetag: **06.12.79**

(54) **Isoliervorrichtung für ein mit einer Ringwicklung zu bewickelndes Blechpaket.**

(30) Priorität: **20.12.78 DE 2855055**

(43) Veröffentlichungstag der Anmeldung:
**23.07.80 Patentblatt 80/15**

(45) Bekanntmachung des Hinweises auf die Patenterteilung:
**12.01.83 Patentblatt 83/2**

(84) Benannte Vertragsstaaten:
**GB NL**

(56) Entgegenhaltungen:
**DE-A-1 613 240**
**DE-A-2 351 877**
**DE-C-1 098 610**
**DE-U-1 906 609**
**FR-A-1 358 207**

(73) Patentinhaber: **SIEMENS AKTIENGESELLSCHAFT**
**Berlin und München, Postfach 22 02 61,**
**D-8000 München 22 (DE)**

(72) Erfinder: **Heerlein, Manfred, Promenadenstrasse 37,**
**D-8740 Bad Neustadt/Saale (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Isoliervorrichtung für ein mit einer Ringwicklung zu bewickelndes Blechpaket

Die Erfindung betrifft eine Isoliervorrichtung für ein mit einer Ringwicklung zu bewickelndes Blechpaket, deren Isolierteile aus zwei zusammenfügbaren, die Stirnseiten und den Rücken des Blechpaketes übergreifenden, formsteifen Halbschalen bestehen, die gleich ausgebildet sind und an deren radialem Aussenumfang eine geradzahlige Anzahl von radial vorstehenden Abstützstegen in gleichem Umfangsabstand zueinander angeformt ist.

Eine solche Isoliervorrichtung ist durch die DE-C-1 098 610 bekannt. Die beiden Halbschalen werden bei der bekannten Isoliervorrichtung durch Kleben miteinander verbunden. Das Verkleben der beiden Halbschalen stellt einen erheblichen Fertigungsaufwand dar.

Aus der DE-U-1 906 609 ist eine umhüllte Spule von Kleinstmotoren bekannt, bei der die Umhüllung der Spule aus zwei miteinander verbindbaren Kunststoffgehäuseteilen besteht. Die beiden Gehäuseteile sind unterschiedlich ausgebildet. Um die beiden die Spule umfassenden Gehäuseteile miteinander verbinden zu können, sind an dem einen Gehäuseteil Ausnehmungen vorgesehen, in die am anderen Gehäuseteil vorgesehene Rastnasen eingreifen. Die beiden miteinander verrasteten Gehäuseteile sind von der umschlossenen Spule her keinen Kräften unterworfen, die die beiden Gehäuseteile auseinanderzudrücken versuchen.

Gegenüber diesem Stand der Technik geht die Erfindung von folgender Problemstellung aus:

Bei hochtourigen, mit einer Ringwicklung versehenen Elektromotoren wird das Ständerblechpaket aus einzelnen, mit Nuten versehenen Blechringen gebildet. Zur Vermeidung von magnetischen Kurzschlüssen dürfen die einzelnen Blechringe nicht miteinander verbunden werden, sondern werden nur lose übereinandergeschichtet. Während des Bewickelns muss daher das in den Halbschalen eingefügte Blechpaket ausreichend zusammengehalten werden.

Der Erfindung liegt die Aufgabe zugrunde, eine Isoliervorrichtung so auszubilden, dass diese einen möglichst geringen Fertigungs- und Montageaufwand erfordert und ausserdem in der Lage ist, das aus den einzelnen Blechringen geschichtete Blechpaket während des Wicklungsvorganges sicher zusammenzuhalten.

Die Lösung der gestellten Aufgabe gelingt nach der Erfindung dadurch, dass von jeweils zwei diametral gegenüberliegenden Abstützstegen der eine eine axial vorspringende Zunge und der andere eine der Aussenkontur der Zungen entsprechende Öffnung aufweist und an den Zungen sowie innerhalb der Öffnungen miteinander in Eingriff bringbare Rastteile vorgesehen sind.

Durch die beschriebene Ausbildung der beiden Isolierteile wird eine Verrastung erreicht, die auch den für das Zusammenhalten der geschichteten Blechringe notwendigen hohen Kräfte standhält. Darüber hinaus ist wegen der identischen Ausbildung der beiden Ioslierteile nur ein Herstellwerkzeug für die komplette Isoliervorrichtung erforderlich.

Anhand eines in der Zeichnung dargestellten Ausführungsbeispieles wird der Anmeldungsgegenstand nachfolgend näher beschrieben.

Es zeigt:

Fig. 1 ein als Halbschale ausgebildetes Isolierteil in Draufsicht,

Fig. 2 einen Längsschnitt des in Fig. 1 dargestellten Isolierteiles,

Fig. 3 einen Detailschnitt durch einen Abstützsteg,

Fig. 4 eine auf ein Blechpaket aufgesteckte Isoliervorrichtung,

Fig. 5 eine Isoliervorrichtung nach Fig. 4 in der oberen Hälfte im Schnitt und in der unteren Hälfte in Seitenansicht.

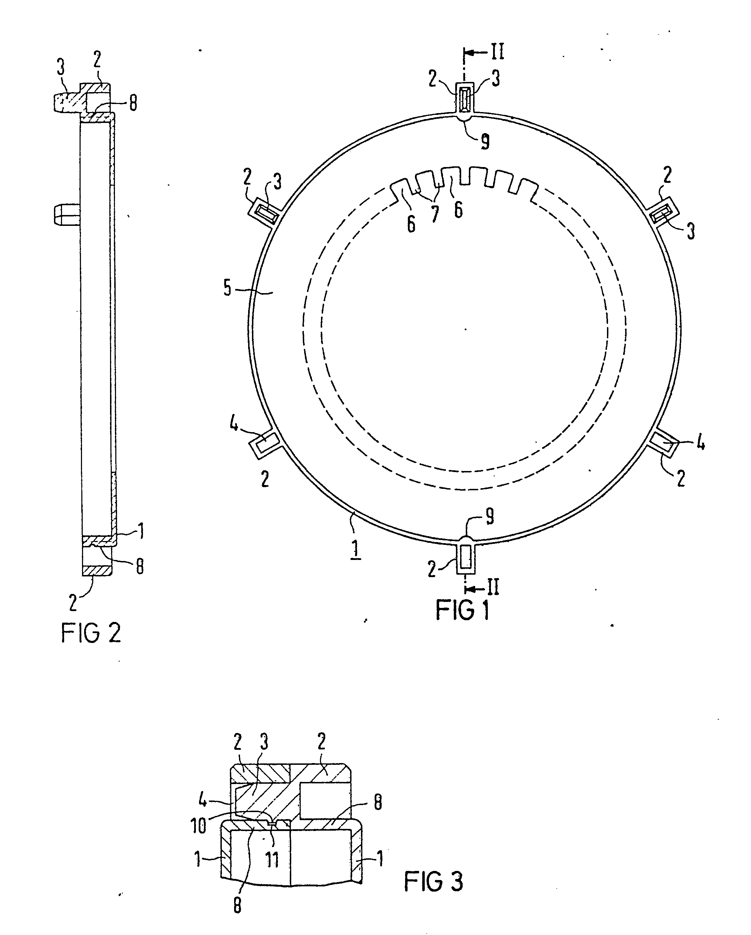

Das in Fig. 1 und 2 dargestellte, als Halbschale ausgebildete Isolierteil 1 weist an seinem Umfang Abstützstege 2 auf. An den in der oberen Bildhälfte dargestellten Abstützstegen 2 sind Zungen 3 angeformt. Die in der unteren Bildhälfte dargestellten Abstützstege 2 sind mit Öffnungen 4 versehen, deren Form der Kontur der Zungen 3 angepasst ist. An dem die Stirnseiten des Blechpaketes übergreifenden, radial vorstehenden Ringteil 5 des Isolierteiles 1 sind Ausnehmungen 6 vorgesehen. Durch die Ausnehmungen 6 werden Zähne 7 gebildet, welche die zwischen den Nuten des Blechpaketes stehenden Zähne stirnseitig überdecken. An dem sich in axialer Richtung erstreckenden Schenkel 8 des Isolierteiles 1 sind zwei Stege 9 angeformt, die zur Positionierung des Isolierteiles gegenüber dem Blechpaket dienen. In dem Blechpaket sind dann entsprechende Ausnehmungen vorgesehen.

Die Detaildarstellung nach Fig. 3 zeigt die Verrastung zwischen einer Zunge 3 und einer Öffnung 4. An der Zunge 3 ist ein kleiner Zapfen 10 angeformt, der in eine entsprechende Vertiefung 11 in der Öffnung 4 eingreift. Durch diese Verrastung werden die beiden Isolierteile 1 zusammengehalten, die damit auch das zwischen den beiden Isolierteilen 1 liegende Blechpaket zusammenhalten.

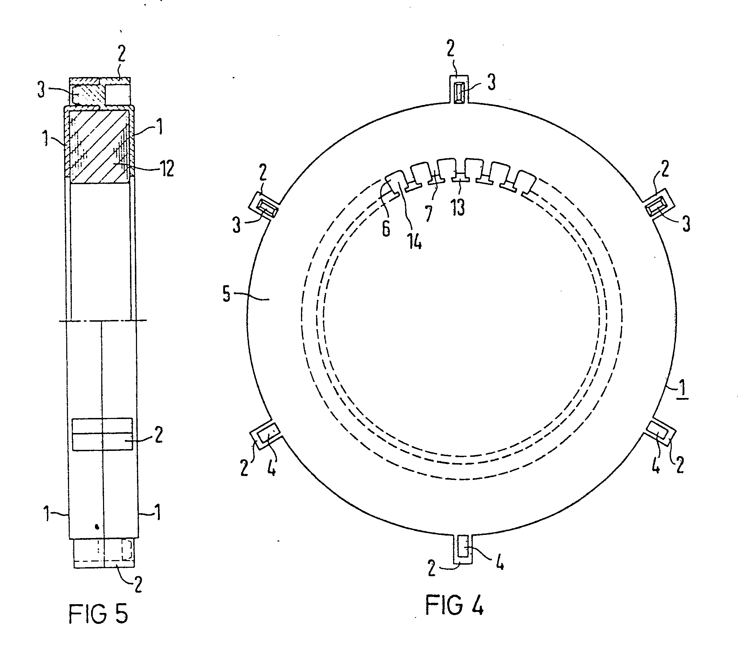

Die Darstellungen nach Fig. 4 und 5 zeigen die auf ein Blechpaket 12 aufgesteckte Isoliervorrichtung. Zwei Isolierteile 1 sind von den Stirnseiten her auf das Blechpaket 12 aufgeschoben. Hierbei greifen die Zungen 3 in die Öffnungen 4 des jeweils anderen Isolierteiles 1. In den Öffnungen 4 verrasten die Zungen 3, wie in Fig. 3 gezeigt. Zwei derart zusammengefügte Isolierteile 1 bilden ein das Blechpaket 12 auf den beiden Stirnseiten und am Rücken übergreifendes Isoliergehäuse. Wie die Draufsicht nach Fig. 4 erkennen lässt, überdecken die Zähne 7 des Isolierteiles 1 die Zähne 13 des Blechpaketes auf den Stirnseiten. Die Ausnehmungen 6 decken sich mit den Nuten 14 des Blechpaketes. Durch die an den Isolierteilen vorgesehenen Stege 9 und entsprechende Ausnehmungen an dem Blechpaket 12 werden das Blechpaket 12 und die Isolierteile 1 in ihrer Lage so zueinander ausgerichtet, dass sich die Ausnehmungen 6 und Zähne 7 des Isolierteiles 1 mit den Nuten 14 und den Zähnen 13 des Blechpaketes 12 decken. Nach dem Zusammenfügen der Isolierteile 1 steht für das nachfolgende Bewickeln eine kompakte Einheit zur Verfügung.

Es hat sich ferner gezeigt, dass durch die an den Isolierteilen 1 angeformten Abstützstege 3 die magnetischen Streuverluste reduziert werden, so dass diese Isolierteile zu einer Wirkungsgradverbesserung der elektrischen Maschine beitragen.

## Patentanspruch

Isoliervorrichtung für ein mit einer Ringwicklung zu bewickelndes Blechpaket (12), deren Isolierteile aus zwei zusammenfügbaren, die Stirnseiten und den Rücken des Blechpaketes übergreifenden, formsteifen Halbschalen (1) bestehen, die gleich ausgebildet sind und an deren radialem Aussenumfang eine geradzahlige Anzahl von radial vorstehenden Abstützstegen (2) in gleichem Umfangsabstand zueinander angeformt ist, dadurch gekennzeichnet, dass von jeweils zwei diametral gegenüberliegenden Abstützstegen (2) der eine eine axial vorspringende Zunge (3) und der andere eine der Aussenkontur der Zungen (3) entsprechende Öffnung (4) aufweist und an den Zungen (3) sowie innerhalb der Öffnungen (4) miteinander in Eingriff bringbare Rastteile (10, 11) vorgesehen sind.

## Claim

An insulating device for housing a bunch of laminations (12) and to be covered by a ring winding, consist of two half shells insulating components (1) which are dimensionally stable, can be joined together to overlap the laminations and which are mutually similar in design and have an even number of radially protruding supporting crosspieces (2) equally spaced circumferential around the radial outer circumference, characterised in that each two supporting crosspieces (2) mutually diametrically opposed one prossessing an axially protruding tongue (3) and the other possessing an opening (4) which corresponds to the outer contour of the tongues (3), and having locking elements (10, 11) arranged both on the tongues (3) and within the openings (4) to be brought into engagement.

## Revendication

Dispositif d'isolation pour un paquet de tôles (12) devant être entouré d'un bobinage en anneau, dont les parties isolantes sont constituées par deux demi-coquilles (1) rigides du point de vue de la forme, susceptibles d'être assemblées, recouvrant les côtés frontaux et le dos du paquet de tôles, demi-coquilles qui sont réalisées de façon identique et sur la périphérie radialement extérieure desquelles est formé un nombre pair de barrettes d'appui (2) saillant radialement et disposées à des distances périphériques identiques entre elles, caractérisé par le fait que parmi deux barrettes d'appui (2) situées diamétralement l'une en face de l'autre, l'une comporte une languette (3) saillant axialement et l'autre une ouverture (4) qui correspond au contour extérieur des languettes (3) et que sur les languettes (3), de même qu'à l'intérieur des ouvertures (4), sont prévus des éléments d'encliquetage (10, 11) susceptibles d'être amenés en prise mutuelle.

FIG 2

FIG 1

FIG 3

FIG 5

FIG 4